# EUROPÄISCHE PATENTSCHRIFT

(11) **EP 2 457 080 B1**
(45) Veröffentlichungstag und Bekanntmachung des Hinweises auf die Patenterteilung: **16.01.2013**
(21) Anmeldenummer: 10784696.6
(22) Anmeldetag: 12.11.2010
(51) Int. Cl.: G01N 3/20, G01M 7/02, G01M 7/04, G01M 99/00

(54) **BELASTUNGSEINRICHTUNG ZUR ERZEUGUNG VON FLÄCHENLASTEN AUF PLATTENFÖRMIGE PRÜFKÖRPER**
LOAD DEVICE FOR GENERATING SURFACE LOADS ON PLATE-SHAPED TEST BODIES
DISPOSITIF D'APPLICATION D'UNE CHARGE RÉPARTIE SUR LA SURFACE DE CORPS À TESTER DE FORME PLATE

(30) Priorität: 13.11.2009 DE 102009053299
(43) Veröffentlichungstag der Anmeldung: 30.05.2012
(73) Patentinhaber: Fraunhofer-Gesellschaft zur Förderung der angewandten Forschung, 80686 München (DE)
(72) Erfinder: SANDER, Martin, 98693 Ilmenau (DE); DIETRICH, Sascha, 04105 Leipzig (DE); EBERT, Matthias, 06114 Halle (DE)
(74) Vertreter: Pfenning, Meinig & Partner GbR
(86) Internationale Anmeldenummer: PCT/EP2010/006985
(87) Internationale Veröffentlichungsnummer: WO 2011/057827

(56) Entgegenhaltungen:
- EP-A1- 0 232 573
- EP-A1- 0 645 877
- DE-A1- 10 206 710
- DE-A1- 19 721 845
- US-A- 4 395 917
- US-A- 5 616 848

## Beschreibung

Die vorliegende Anmeldung betrifft eine Belastungseinrichtung zur Erzeugung von Flächenlasten auf plattenförmige Prüfkörper sowie ein Betriebsverfahren für diese Belastungseinrichtung.

Zur Auslegung, Prüfung und Klassifizierung von plattenförmigen Bauteilen wie Türen, Fenstern, Fußbodenplatten und Photovoltaikmodulen wird eine gleichmäßige Flächenlast benötigt, da diese Bauteile in ihrem späteren Einsatz Druck- und Soglasten (z. B. Wind, Schnee) ausgesetzt sind. U.A. sind daher für die Zertifizierung von Photovoltaikmodulen in den internationalen Normen IEC 61215 und IEC 61646 bestimmte Flächenlasten zur Prüfung vorgegeben (2400 Pa Winddruck und Windsog, 5400 Pa Schneelast). Ein Versagen des Photovoltaikmoduls tritt typischerweise in Form von Rissen im Glas auf. Dabei entstehen meist zuerst mehrere kleine Risse, bevor das Modul komplett versagt. Wünschenswert ist ein Erkennen von ersten Rissen während der Belastungsprüfung.

Bisherige Belastungstests wurden beispielsweise manuell durchgeführt. Eine gleichmäßige Flächenlast kann manuell beispielsweise durch das Auflegen von definiert gefüllten Sandsäcken bzw. Wassersäcken aufgebracht werden.

Automatisierte Lösungen beinhalten Belastungseinrichtung mit mehreren möglichst gleichmäßig verteilten Einheiten, bestehend aus Vakuumsaugern in Verbindung mit Pneumatikzylindern zum Aufbringen von Druck- und Zugkräften.

Nachteilig an diesem Stand der Technik ist, dass eine reale Flächenlast nicht genügend genau simuliert werden kann. Bei statischen Belastungen ist dies noch hinnehmbar, allerdings ist insbesondere bei dynamischen Belastungen (beispielsweise Lastwechsel von Zug- auf Druckbelastung, insbesondere wenn diese höherfrequent erfolgt) noch keine befriedigende Lösung gefunden worden.

Es ist daher die Aufgabe der Erfindung, eine Belastungseinrichtung sowie ein Betriebsverfahren für diese vorzuschlagen, die bzw. das für plattenförmige Prüfkörper eine reale Flächenlast gut simuliert, wobei insbesondere auch dynamische Belastungszustände simuliert werden können.

Diese Aufgabe wird durch eine Belastungseinrichtung bzw. ein Betriebsverfahren nach den unabhängigen Ansprüchen gelöst.

Die Belastungseinrichtung zur Erzeugung von Flächenlasten auf plattenförmige Prüfkörper enthält zumindest:
- ein Gestell zum Einlegen des Prüfkörpers und
- mindestens zwei Belastungseinheiten zum Aufbringen einer simulierten Flächenlast auf den Prüfkörper, wobei jede Belastungseinheit mindestens einen elektromagnetischen Linearmotor aufweist.

Durch die Mehrzahl der Belastungseinheiten wird eine Flächenlast simuliert. Insbesondere durch die Verwendung der elektromagnetischen Linearmotoren wird hierbei auch ein schnell reagierendes Stellglied vorgeschlagen, das sehr genau auch bei dynamischen Tests funktioniert.

Elektromagnetische Linearmotoren haben (beispielsweise gegenüber pneumatischen Systemen) den Vorteil, dass sich die Kolben/Läufer dieser Linearmotoren, weitgehend unabhängig vom Lastzustand, relativ genau vorhersehbar bewegen. Insbesondere für Prüfkörper mit Kriechneigung ergeben sich durch ruckartige Bewegungsabläufe bei pneumatischen Systemen große Messungenauigkeiten (Stick-Slip-Effekt/Ruckgleiten). Außerdem ist aufgrund des konstruktiven Aufbaus der Pneumatik-Zylinder der Zusammenhang zwischen Zylinderdruck und Kolbenkraft in der Regel nicht linear. Für verlässliche Messungen muss daher der Zusammenhang in der Belastungseinrichtung mittels Kraftmessdosen immer wieder kalibriert und neu bestimmt werden. Schließlich weisen Pneumatik-Zylinder den zusätzlichen Nachteil auf, dass durch unterschiedlich lange Druckzuleitungen Druckunterschiede in den einzelnen Pneumatik-Zylindern bestehen und die Systeme eine stetige Leckage besitzen.

All diese Nachteile werden mit der Belastungseinrichtung nach der vorliegenden Erfindung vermieden.

Insbesondere vorteilhaft ist, dass die Belastungseinheiten nach dem erfindungsgemäßen Betriebsverfahren mit einer genau definierten Kraft bzw. mit einer genau definierten Verformung gefahren werden können, wobei hier Lastwechselfrequenzen bis unter 10 Hertz möglich sind. Die Linearmotorsteuerung erlaubt es, Parameter für Verfahrgeschwindigkeit, Anfahr- und Bremsbeschleunigung vorzugeben. Damit lässt sich im Gegensatz zu Pneumatik-Zylindern eine definierte dynamische Bewegung aufprägen. Durch eine geeignete elektrische Verschaltung der Linearmotoren bzw. der Steuerung untereinander wirken diese Fahrbefehle immer synchron auf alle Einheiten.

Weiterbildungen der Erfindung werden in den abhängigen Ansprüchen beschrieben.

Eine Weiterbildung sieht vor, dass jede Belastungseinheit ein oder mehrere, vorzugsweise zwei elektromagnetische Linearmotoren aufweist, welche einerseits mit dem Gestell (oder einer anderen, ortsfesten Aufnahme) und andererseits mit einem Übertragungselement zum Aufbringen von Lasten auf den Prüfkörper verbunden sind. Hierdurch kann eine definierte Kraft/Verformung beaufschlagt werden, durch das mechanische und elektrische Zusammenschalten mehrerer elektromagnetischer Linearmotoren können auch besonders hohe Kräfte aufgebracht werden.

Insbesondere für statische Versuche mit sehr hohen Kräften ist es außerdem möglich, die Belastungseinheiten mit einer zusätzlichen mechanischen oder auch Magnetbremse zu versehen, um (insbesondere bei nicht kriechenden Prüfkörpern) eine konstante Belastung (Verformung) zu halten.

Eine weitere Weiterbildung sieht vor, dass jede Belastungseinheit sowohl durch Vorgabe einer Verschiebung oder durch Vorgabe einer Kraft statisch und/oder dynamisch individuell gesteuert werden kann. Für spezielle Prüfungen lassen sich frei wählbare Lastkollektive vorgeben. Diese Lastkollektive können beispielsweise aus numerischen Simulationen ermittelt und in die Steuerung importiert werden.

Eine weitere Weiterbildung sieht vor, dass sich die Belastungseinrichtung in x- und in y-Richtung im Gestell verschieben lassen, um eine möglichst gleichmäßige Verteilung auf dem plattenförmigen Prüfkörper zu erreichen. Es lassen sich einzelne Belastungseinheiten mit wenig Aufwand abschalten, sodass diese den Prüfkörper nicht berühren.

Eine weitere Weiterbildung sieht vor, dass das Übertragungselement ein Saugnapf, eine Stange, eine Lastplatte und/oder ein Druckkissen ist. Die Ankopplung des Übertragungselements an den Prüfkörper kann hierbei kraft-, form- oder stoffschlüssig sein. Der Stoffschluss kann hierbei temporär oder auch permanent sein, hier kommen sogar Fügemöglichkeiten wie Vereisen, Kleben oder magnetische Fügevarianten in Betracht.

Als kraftschlüssige Kopplungen der Belastungseinheit mit dem Prüfkörper bieten sich Saugnäpfe/ Vakuumsauger an. Diese hinterlassen keine Schäden an dem Prüfkörper, außerdem sind durch diese sowohl Druck- als auch Sogkräfte übertragbar. Die auftretende Verformung des Prüfkörpers unter dem Vakuumsauger aufgrund des aufgebrachten Unterdrucks kann durch eine geeignete Saugergeometrie bzw. eine prüfkraftabhängige Druckregelung verringert werden, um Schädigungen des Prüfkörpers zu minimieren.

Eine weitere Weiterbildung sieht vor, dass die Belastungseinheit zum Übertragungselement hin ein möglichst spielfreies Gelenk aufweist. Dieses Gelenk kann ein Gummigelenk (elastisches Gelenk), ein Kugelgelenk oder ein Kreuzgelenk/Kardangelenk sein. Wichtig ist hierbei, dass auch bei einer Fehlpositionierung des Linearmotors und bei starker Verformung des Prüfkörpers vorzugsweise eine möglichst senkrechte Kraft auf den plattenförmigen Prüfkörper aufgebracht wird.

Eine weitere Ausführungsform sieht vor, dass die Belastungseinheit eine Kraftmesseinrichtung aufweist. Mit dieser können, insbesondere bei Belastungseinheiten, bei denen mehrere Linearmotore in einer einzigen Belastungseinheit verschaltet sind, die resultierenden Kräfte auf den Prüfkörper gut überprüft werden.

Die Linearmotoren weisen in einer Abwandlung einen Stator sowie einen Läufer auf, wobei der Läufer vorzugsweise auswechselbar gestaltet ist. Durch diese Auswechselbarkeit wird erreicht, dass die Belastungseinrichtung sehr variabel an die gewünschten Verformungen des Prüfkörpers anpassbar ist. Für gewünschte starke Verformungen können daher längere Läufer vorgesehen werden, ein Austausch der gesamten Belastungseinheit ist nicht notwendig.

Eine weitere Weiterbildung sieht vor, dass die Linearmotoren jeweils einen Stator sowie einen Läufer aufweisen, wobei die relative Verschiebung und/oder relative Kraft zwischen Stator und Läufer durch mindestens eine zum Linearmotor gehörende Kontrolleinheit erfassbar sind. Hierdurch kann zunächst einmal der Belastungszustand/Verformungszustand jedes einzelnen Linearmotors getrennt erfasst werden und somit eine Überlastung leicht detektiert werden. Durch Kenntnis von Kraft und Verschiebung beim Aufsetzen der Sauger auf den Prüfkörper vor Zuschalten des Vakuums kann der Ausgangszustand nach Zuschalten des Vakuums (und damit verbundenen Verformungen der Sauger) durch Regelung auf die Ausgangsverschiebung oder auf die Ausgangskraft eingestellt werden. Somit kann der Prüfkörper ohne Vorverformung/Vorschädigung getestet werden.

Eine Weiterbildung sieht vor, dass das Gestell Befestigungsmöglichkeiten zur sicheren Montage des Prüfkörpers nach den Angaben des Herstellers besitzt. Dies können beispielsweise Klemmen bzw. Schienen sein, welche mit einer elastischen Lage, z. B. Gummi, versehen sind. Eine weitere Befestigungsmöglichkeit sind auf den Prüfkörper aufgeklebte Verstrebungen, welche mit Schrauben am Gestell befestigt werden. Auf diese Weise kann der Prüfkörper wirklichkeitsnah eingespannt werden.

Das Gestell soll es weiterhin ermöglichen, Fehlmontagen oder einsatzbedingte symmetrische oder unsymmetrische Verschiebungen der Befestigungspunkte vorzunehmen, um gezielt Extremfälle untersuchen zu können.

Eine Weiterbildung sieht vor, dass das Gestell eine Kraftmesseinheit zum Messen der Reaktionskräfte des

Prüfkörpers gegenüber dem Gestell aufweist und/oder das Gestell eine Vorrichtung zum Messen der Auslenkung des Prüfkörpers mittels eines mechanischen oder optischen Wegaufnehmers aufweist. Hierdurch wird die tatsächliche Auslenkung bzw. die tatsächliche Kraft auf den Prüfkörper nochmals festgestellt. Dies kann außerdem eine Plausibilitätskontrolle der von den einzelnen Belastungseinheiten/Linearmotoren gemessenen Verformungs- und Kraftgrößen ermöglichen.

Eine Weiterbildung sieht vor, dass durch eine geeignete Steuerung des Prüfvorgangs ein Erkennen von ersten Schädigungen, wie Anrissen im Glas, stattfindet. Durch definierte Abbruchkriterien wie Kraftsprung, Wegsprung, Erfassen der Rissentstehung durch Körperschall, o.ä. wird die Prüfung gestoppt und die Belastungseinheiten ggf. in ihrer Ausgangslage zurück gefahren, bzw. auf der gerade eingestellten Kraft bzw. Weg gehalten. Ziel ist es, durch Interpretation der beobachteten Schäden, die Schädigungsursache zu ermitteln.

Eine Weiterbildung sieht vor, dass das Gestell Unterstützungselemente aufweist, die den Prüfkörper entlang mindestens 2 Prozent eines Randes des Prüfkörpers in einem Randbereich unterstützen, und zwar mindestens auf einer von den eine Belastung ausübenden Belastungselementen abgewandten Seite des Prüfkörpers. Alternativ ist der Prüfkörper entlang mindestens 2 Prozent des Randes im Randbereich durch fest mit dem Gestell verbundene Rahmenelemente fixiert. Dabei erstreckt sich der Randbereich über eine Breite von wenigstens 1 cm.

Weitere Weiterbildungen werden in den übrigen abhängigen Ansprüchen beschrieben.

Eine Ausführungsform wird nun anhand mehrerer Figuren erläutert. Es zeigen:
- Fig. 1: ein Beispiel einer erfindungsgemäßen Belastungseinrichtung,
- Fig. 2: eine Ansicht einer in Fig. 1 verbauten Belastungseinheit,
- Fig. 3: eine schematische Darstellung eines erfindungsgemäßen elektromagnetischen Linearmotors und
- Fig. 4: ein Kraft-Weg-Diagramm für den in Fig. 3 gezeigten Linearmotor.

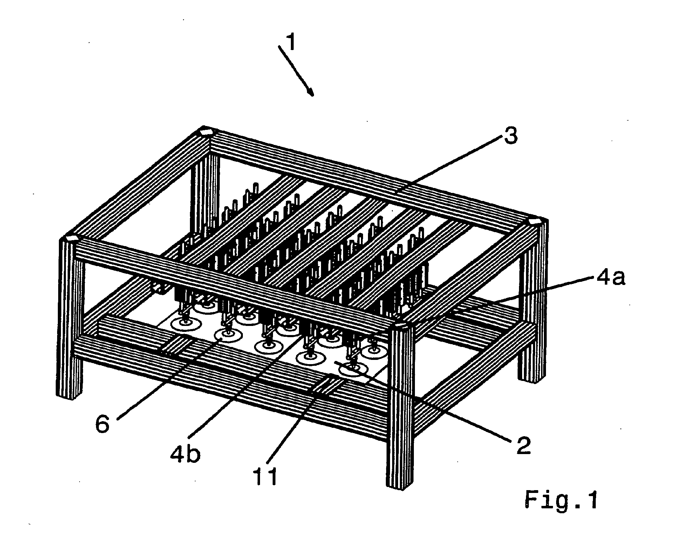

Fig. 1 zeigt ein Beispiel einer erfindungsgemäßen Belastungseinrichtung 1.

Diese weist ein Gestell 3 auf. Dieses Gestell hat im Wesentlichen die Form eines Tisches mit zwei Ebenen. Das Gestell hat hierfür vier Beine, die obere Ebene des tischförmigen Gestells dient als Aufnahme/Widerlager für die Belastungseinheiten 4a, 4b. Diese Belastungseinheiten weisen außerdem Übertragungselemente auf, welche sich auf dem Prüfkörper 2 abstützen. Dieser Prüfkörper 2 bildet also die zweite, in diesem Fall untere Ebene des tischförmigen Gestells. Der Prüfkörper 2 ist mittels einer Klemmvorrichtung 11 mit dem Gestell fest verbunden. Bei dieser Klemmvorrichtung handelt es sich um insgesamt vier Klemmen nach Montagevorschrift des Modul-Herstellers, die den im Wesentlichen rechteckförmigen Prüfkörper entlang dessen Längsseiten einspannen. Die vier Klemmen stellen dabei eine Ausführungsform von fest mit dem Gestell 3 verbunden Rahmenelementen dar, durch die der Prüfkörper 2 entlang etwa 5 Prozent eines Randes des Prüfkörpers 2 in einem Randbereich fixiert ist. Entlang der Längsseiten des Prüfkörpers 2 weist das Gestell 3 zudem Unterstützungselemente auf, die in Fig. 1 von dem Gestell 3 verdeckt sind und die den Prüfkörper 2 entlang der beiden Längsseiten des Prüfkörpers 2 im Randbereich unterstützen, und zwar auf einer von den eine Belastung ausübenden Belastungseinheiten 4a, 4b abgewandten Unterseite des Prüfkörpers 2. Der Randbereich, in dem der Prüfkörper 2 durch die vier Klemmen fixiert ist und durch die Unterstützungselemente unterstützt wird, erstreckt sich über eine Breite von 1 cm.

Die Belastungseinheiten 4a, 4b bzw. auch die weiteren Belastungseinheiten werden mittels einer hierfür vorgesehenen Steuervorrichtung voneinander unabhängig angesteuert. Es besteht weder eine mechanische noch eine elektronische Zwangskopplung mehrerer Belastungseinheiten. Hierdurch ist eine praktisch beliebige Simulation auch unsymmetrischer Flächenlasten möglich. Es ist insbesondere möglich, dass die jeweils unterschiedlichen Belastungseinheiten, je nach Prüfvorgabe, jeweils einen definierten Weg und/oder eine definierte Kraft auf den Prüfkörper beaufschlagen. Die Belastungseinrichtung 1 ist auch für hochdynamische Lastwechselsimulationen geeignet, es sind hiermit genaue Messungen mit Lastwechselfrequenzen unter 1 Hertz, besonders vorzugsweise unter 10 Hertz möglich. Die Positioniergenauigkeit des Linearmotors beträgt ±50 µm. Die Positioniergenauigkeit der gesamten Belastungseinheit wird bestimmt durch die elastische Verformung des Vakuumsaugers und der Kraftmesszelle. Dies ist abhängig von der aufgebrachten Kraft und dem eingestellten Unterdruck am Vakuumsauger.

Die Messung bzw. Überprüfung einer tatsächlichen Verformung bzw. Kraft ist außerdem über eine hier nicht dargestellte Kraftmesseinheit zum Messen der Reaktionskräfte des Prüfkörpers gegenüber dem Gestell möglich. Hierzu kann beispielsweise die Klemmvorrichtung eine Kraftmesseinheit aufweisen, mit der zumindest die resultierenden Kräfte an den Einspannstellen des Prüfkörpers 2 erkannt werden. Alternativ oder zusätzlich kann das Gestell auch eine Vorrichtung zum Messen der Auslenkung des Prüfkörpers aufweisen. Hierfür bieten sich mechanische oder optische Wegaufnehmer an.

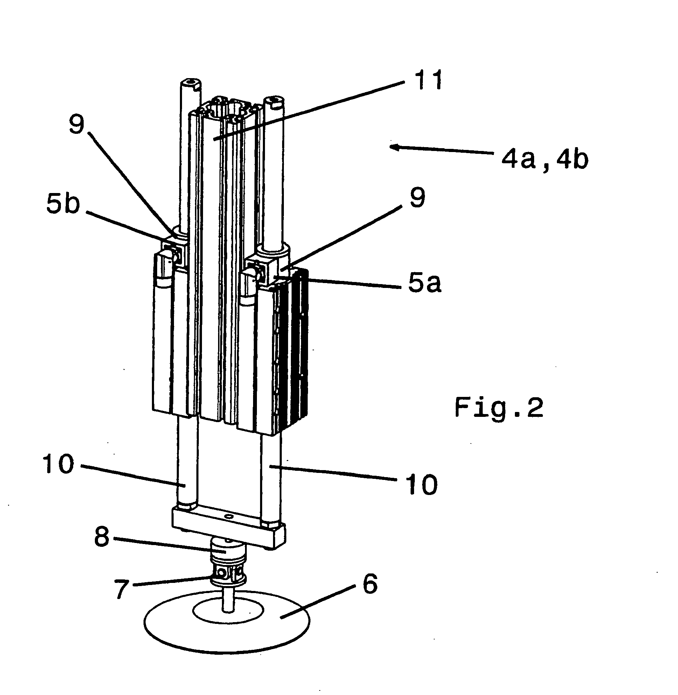

Fig. 2 zeigt eine Detailansicht der Belastungseinheit 4a bzw. der baugleichen Belastungseinheit 4b.

Die Belastungseinheit weist ein Halteelement 11 auf, welches mit dem Gestell 3 fest verbindbar ist. Beidseits dieses Halteelements 11 sind Linearmotoren 5a und 5b angebracht.

Die Linearmotoren weisen jeweils Läufer 10 auf, die gegenüber einem jeweiligen Stator 9 translatorisch verschiebbar sind. Die dem Prüfkörper zugewandten Enden der Läufer 10 sind miteinander über eine Traverse verbunden, an der eine Kraftmesseinrichtung 8 der Belastungseinheit befestigt ist. An diese Kraftmesseinrichtung 8 schließt sich dann ein Gelenk 7, vorliegend ein mechanisches Kreuzgelenk, an. An dieses wiederum schließt sich ein Übertragungselement 6 in Form eines Vakuumsaugers an. Dieser Sauger kann sowohl Zug- als auch Druckkräfte übertragen. Um sowohl Druck- als auch Zug-Kräfte aufbringen zu können, ist der Vakuumsauger mit einer nicht gezeigten Zuführung zum Aufbringen von Unterdruck auf den Prüfkörper 2 verbunden. Die Höhe des aufgebrachten Unterdrucks bestimmt die sicher übertragbaren Zugkräfte. In einer nicht gezeigten weiterbildung ist es sogar möglich, dass mindestens ein Läufer 10 hohl ausgeführt ist und der Druckluftpfad zur Herstellung des Unterdrucks zwischen dem Saugnapf und dem Prüfkörper durch den Läufer verläuft. Der Unterdruck im Vakuumsauger kann damit ohne zusätzliche Druckluftschläuche durch den Läufer hindurch aufgebracht werden. Die gezeigten Läufer 10 sind gegenüber dem jeweiligen Stator 9 auswechselbar, um hier verschiedene Auslenkungsbereiche abdecken zu können.

Die in Fig. 2 gezeigte Belastungseinheit ist lediglich beispielhaft zu verstehen, insbesondere bei reiner Druckbelastung ist statt eines Saugnapfes auch ein Druckkissen, eine Stange oder eine einfache Lastplatte möglich.

Fign. 1 und 2 zeigen somit eine Belastungseinrichtung 1 zur Erzeugung von Flächenlasten auf plattenförmige Prüfkörper 2, enthaltend ein Gestell 3 zum Einlegen des Prüfkörpers 2 und mindestens zwei Belastungseinheiten 4a, 4b zum Aufbringen einer simulierten Flächenlast auf den Prüfkörper 2, wobei jede Belastungseinheit mindestens einen elektromagnetischen Linearmotor 5a, 5b aufweist.

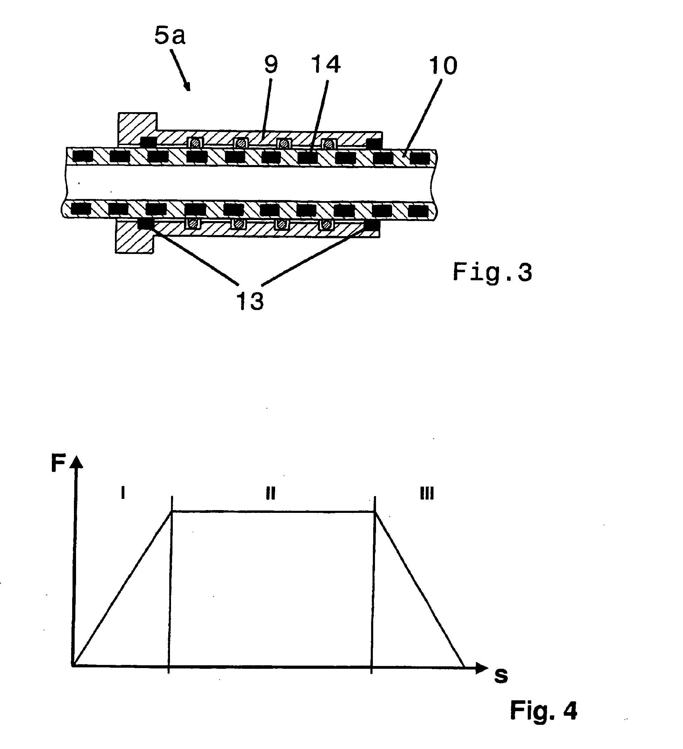

Fig. 3 zeigt nochmals schematisch den Aufbau des Linearmotors 5a. Der Stator 9 zeigt Wicklungen sowie eine Vorrichtung zur Positions-/Krafterfassung und zur Temperaturüberwachung. Außerdem weist in der hier gezeigten Weiterbildung der Stator Zusatzlager 13 auf, die eine besonders gute Führung des Läufers 10 im Stator 9 ermöglichen. Diese sind nur bei sehr hohen Belastungen notwendig, da sonst der Läufer 10 im Wesentlichen berührungsfrei innerhalb des Stators 9 gehalten ist. Der Läufer 10 weist Antriebsmagnete/Permanentmagnete 14 auf, die von den Wicklungen im Stator 9 in Bewegung gebracht werden können. Der Läufer 10 ist vorliegend als Hohlläufer dargestellt, durch welchen auch ein Druckluftpfad für Saugnäpfe verlaufen kann.

Fig. 4 zeigt ein Kraft-Weg-Diagramm für einen Linearmotor nach Fig. 3. Hierbei ist hervorzuheben, dass in einem relativ großen Bereich (gekennzeichnet mit II) über den Weg (s) eine konstante Kraft (f) ausgeübt wird. Dies hat den Vorteil, dass keine Nichtlinearitäten auftreten, welche durch zusätzliche Messaufnehmer bzw. Kalibrierung zu berücksichtigen wären. Die bei den Prüfkörpern auftretenden großen Verformungen werden durch den Linearmotor bei konstanter Prüfkraft automatisch ausgeglichen.

## Patentansprüche

1. Belastungseinrichtung (1) zur Erzeugung von Flächenlasten auf plattenförmige Prüfkörper (2), enthaltend:
- ein Gestell (3) zum Einlegen des Prüfkörpers (2),
- mindestens zwei Belastungseinheiten (4a, 4b) zum Aufbringen einer simulierten Flächenlast auf den Prüfkörper (2), wobei
- jede Belastungseinheit mindestens einen elektromagnetischen Linearmotor (5a, 5b) aufweist.

2. Belastungseinrichtung nach Anspruch 1, **dadurch gekennzeichnet, dass** jede Belastungseinheit (4a, 4b) ein oder mehrere, vorzugsweise zwei elektromagnetische Linearmotoren (5a, 5b) aufweist, welche einerseits mit dem Gestell (3) verbunden sind und andererseits mit einem Übertragungselement (6) zum Aufbringen von Lasten auf den Prüfkörper verbunden sind.

3. Belastungseinrichtung nach Anspruch 2, **dadurch gekennzeichnet, dass** das Übertragungselement (6) ein Saugnapf, eine Stange, eine Lastplatte und/oder ein Druckkissen ist.

4. Belastungseinrichtung nach einem der Ansprüche 2 oder 3, **dadurch gekennzeichnet, dass** die Ankopplung des Übertragungselements (6) an den Prüfkörper (2) kraft-, form- oder stoffschlüssig ist.

5. Belastungseinrichtung nach einem der Ansprüche 2 bis 4, **dadurch gekennzeichnet, dass** das Übertragungselement (6) eingerichtet ist zur Übertragung von Zug und/oder Druckkräften.

6. Belastungseinrichtung nach einem der Ansprüche 2 bis 5, **dadurch gekennzeichnet, dass** die Belastungseinheit (4a, 4b) zum Übertragungselement hin ein Gelenk (7) aufweist.

7. Belastungseinrichtung nach einem der Ansprüche 2 bis 6, **dadurch gekennzeichnet, dass** die Belastungseinheit (4a, 4b) eine Kraftmesseinrichtung (8) aufweist.

8. Belastungseinrichtung nach einem der vorhergehenden Ansprüche, **dadurch gekennzeichnet, dass** eine Steuervorrichtung vorgesehen ist zur voneinander unabhängigen Steuerung und/oder Abschaltung einzelner Belastungseinheiten,
und/oder **dadurch gekennzeichnet, dass** die Linearmotoren (5a, 5b) jeweils einen Stator (9) und einen Läufer (10) aufweisen, wobei der Läufer (10) vorzugsweise für die Abdeckung unterschiedlicher Bewegungsbereiche auswechselbar ist,
und/oder **dadurch gekennzeichnet, dass** die Linearmotoren (5a, 5b) jeweils einen Stator (9) sowie einen Läufer (10) aufweisen, wobei die relative Verschiebung und/oder relative Kraft zwischen Stator (9) und Läufer (10) durch mindestens eine zum Linearmotor gehörende Kontrolleinheit erfassbar sind,
und/oder **dadurch gekennzeichnet, dass** mindestens ein Linearmotor (5a, 5b) einen mit einem Hohlraum versehenen Läufer (10) aufweist, wobei dieser Hohlläufer derart ausgestaltet ist, dass ein für ein Übertragungselement (6) benötigter Druckluftpfad durch den Hohlläufer verläuft,
und/oder **dadurch gekennzeichnet, dass** das Gestell (3) eine Befestigungsvorrichtung (11) zur Lagerung des Prüfkörpers (2) aufweist.

9. Belastungseinrichtung nach einem der vorhergehenden Ansprüche, **dadurch gekennzeichnet, dass** das Gestell Unterstützungselemente aufweist, die den Prüfkörper entlang mindestens 2 Prozent eines Randes des Prüfkörpers in einem Randbereich unterstützen, und zwar mindestens auf einer von den eine Belastung ausübenden Belastungseinheiten abgewandten Seite des Prüfkörpers.

10. Belastungseinrichtung nach einem der Ansprüche 1 bis 8, **dadurch gekennzeichnet, dass** der Prüfkörper entlang mindestens 2 Prozent eines Randes des Prüfkörpers in einem Randbereich durch fest mit dem Gestell verbundene Rahmenelemente fixiert ist.

11. Belastungseinrichtung nach Anspruch 9 oder 10,
**dadurch gekennzeichnet, dass** sich der Randbereich über eine Breite von mindestens 1 cm erstreckt.

12. Belastungseinrichtung nach einem der vorhergehenden Ansprüche, **dadurch gekennzeichnet, dass** das Gestell (3) eine Kraftmesseinheit zum Messen der Reaktionskräfte des Prüfkörpers (2) gegenüber dem Gestell aufweist und/oder das Gestell (3) eine Vorrichtung zum Messen der Auslenkung des Prüfkörpers aufweist mittels eines mechanischen oder optischen Wegaufnehmers.

13. Belastungseinrichtung nach einem der vorhergehenden Ansprüche, **dadurch gekennzeichnet, dass** der plattenförmige Prüfkörper eine Dicke von mindestens 4 mm oder mindestens eine von mindestens 500 cm² aufweist.

14. Betriebsverfahren für die Belastungseinrichtung nach einem der vorhergehenden Ansprüche, **dadurch gekennzeichnet, dass** mindestens zwei Belastungseinheiten (4a, 4b) jeweils einen definierten Weg und/oder eine definierten Kraft auf den Prüfkörper (2) ausüben.

15. Betriebsverfahren nach Anspruch 14, **dadurch gekennzeichnet, dass** die aufgebrachten Kräfte statisch oder dynamisch, vorzugsweise mit Lastwechselfrequenzen unter 1 Hertz, besonders vorzugsweise unter 10 Hertz aufgebracht werden.

## Claims

1. A loading device (1) to generate surface loads on plate-shaped test pieces (2), comprising:
- a frame (3) for placement of the test piece (2) therein,
- at least two loading units (4a, 4b) for application of a simulated surface load to the test piece (2), wherein
- each loading unit has at least one electromagnetic linear motor (5a, 5b).

2. A loading device according to claim 1, **characterised in that** each loading unit (4a, 4b) has one or several, preferably two, electromagnetic linear motors (5a, 5b), which on the one hand are connected to the frame (3) and on the other hand are connected to a transmission element (6) for the application of loads to the test piece.

3. A loading device according to claim 2, **characterised in that** the transmission element (6) is a suction cup, a bar, a load plate and/or a pressure pad.

4. A loading device according to any one of claims 2 and 3, **characterized in that** the transmission element (6) is coupled to the test piece (2) in a force-locked, form-locked or material-to-material locked manner.

5. A loading device according to any one of claims 2 to 4, **characterised in that** the transmission element (6) is arranged to transmit tension and/or compressive forces.

6. A loading device according to any one of claims 2 to 5, **characterised in that** the loading unit (4a, 4b) has a joint (7) toward the transmission element.

7. A loading device according to any one of claims 2 to 6, **characterised in that** the loading unit (4a, 4b) has a force measuring device (8).

8. A loading device according to any one of the preceding claims, **characterised in that** a control device is provided to control and/or turn off individual loading units independently of one another,
and/or **characterised in that** the linear motors (5a, 5b) each have a stator (9) and a rotor (10), wherein the rotor (10) is preferably exchangeable to cover different motion ranges,
and/or **characterised in that** the linear motors (5a, 5b) each have a stator (9) and a rotor (10), wherein the relative displacement and/or relative force between stator (9) and rotor (10) are determinable by at least one monitoring unit forming part of the linear motor,
and/or **characterised in that** at least one linear motor (5a, 5b) has a rotor (10) provided with a cavity, wherein this hollow rotor is fashioned in such a manner that a compressed air pathway required for a transmission element (6) runs though the hollow rotor,
and/or **characterised in that** the frame (3) has a securing device (11) for mounting of the test piece (2).

9. A loading device according to any one of the preceding claims, **characterised in that** the frame has support elements which support the test piece in an edge region along at least 2 percent of an edge of the test piece, namely at least on a test-piece side remote from the loading units exerting a load.

10. A loading device according to any one of claims 1 to 8, **characterised in that** in an edge region, the test piece is fixed along at least 2 percent of an edge of the test piece by frame elements securely connected to the frame.

11. A loading device according to claim 9 or 10, **characterised in that** the edge region extends over a width of at least 1 cm.

12. A loading device according to any one of the preceding claims, **characterised in that** the frame (3) has a force measuring unit to measure the reaction forces of the test piece (2) with respect to the frame and/or the frame (3) has a device to measure the deflection of the test piece by means of a mechanical or optical displacement transducer.

13. A loading device according to any one of the preceding claims, **characterised in that** the plate-shaped test piece has a thickness of at least 4 mm or at least a thickness of at least 500 cm².

14. An operating method for the loading device according to any one of the preceding claims, **characterised in that** at least two loading units (4a, 4b) each exert a defined path and/or a defined force upon the test piece (2).

15. An operating method according to claim 14, **characterised in that** the applied forces are applied statically or dynamically, preferably with load cycle reversal frequencies below 1 hertz, particularly preferably below 10 hertz.

## Revendications

1. Dispositif de chargement (1) pour la production de charges de surface sur des échantillons en forme de plaques (2), comprenant:
- un bâti (3) pour l'installation de l'échantillon (2) ;
- au moins deux unités de chargement (4a, 4b) pour l'application d'une charge de surface simulée sur l'échantillon (2), où
- chaque unité de chargement présente au moins un moteur linéaire électromagnétique (5a, 5b).

2. Dispositif de chargement selon la revendication 1, **caractérisé en ce que** chaque unité de chargement (4a, 4b) présente un ou plusieurs, de préférence deux moteurs linéaires électromagnétiques (5a, 5b), qui sont reliés d'un côté avec le bâti (3) et qui sont reliés de l'autre côté avec un élément de transmission (6) pour l'application de charges sur l'échantillon.

3. Dispositif de chargement selon la revendication 2, **caractérisé en ce que** l'élément de transmission (6) est une ventouse, une tige, une plaque de charge et/ou un coussin de pression.

4. Dispositif de chargement selon l'une quelconque des revendications 2 ou 3, **caractérisé en ce que** le raccordement de l'élément de transmission (6) contre les échantillons (2) est réalisé par liaison de force, de forme ou de matière.

5. Dispositif de chargement selon l'une quelconque des revendications 2 à 4, **caractérisé en ce que** l'élément de transmission (6) est aménagé pour la transmission de forces de traction et/ou de pression.

6. Dispositif de chargement selon l'une quelconque des revendications 2 à 5, **caractérisé en ce que** l'unité de chargement (4a, 4b) présente une articulation (7) vers à l'élément de transmission.

7. Dispositif de chargement selon l'une quelconque des revendications 2 à 6, **caractérisé en ce que** l'unité de chargement (4a, 4b) présente un dispositif dynamométrique (8).

8. Dispositif de chargement selon l'une quelconque des revendications précédentes, **caractérisé en ce qu'**un dispositif de commande est prévu pour la commande et/ou la désactivation, indépendamment l'une de l'autre, des unités de chargement individuelles,
et/ou **caractérisé en ce que** les moteurs linéaires (5a, 5b) présentent respectivement un stator (9) et un rotor (10), le rotor (10) étant de préférence interchangeable pour la couverture de différentes zones de mouvement,
et/ou **caractérisé en ce que** les moteurs linéaires (5a, 5b) présentent respectivement un stator (9) ainsi qu'un rotor (10), le déplacement relatif et/ou la force relative entre le stator (9) et le rotor (10) pouvant être saisis via au moins une unité de contrôle faisant partie du moteur linéaire,
et/ou **caractérisé en ce qu'**au moins un moteur linéaire (5a, 5b) présente un rotor (10) pourvu d'un espace creux, ce rotor creux étant conçu de telle sorte qu'un chemin d'air comprimé nécessaire pour un élément de transmission (6) passe au travers du rotor creux ;
et/ou **caractérisé en ce que** le bâti (3) présente un dispositif de fixation (11) pour le logement de l'échantillon (2).

9. Dispositif de chargement selon l'une quelconque des revendications précédentes, **caractérisé en ce que** le bâti présente des éléments de support qui supportent l'échantillon le long d'au moins 2 pourcent d'un bord de l'échantillon dans une zone périphérique, et ce au moins sur un côté de l'échantillon situé à l'opposé des unités de chargement exerçant une sollicitation.

10. Dispositif de chargement selon l'une quelconque des revendications 1 à 8, **caractérisé en ce que** l'échantillon est fixé le long d'au moins 2 pourcent d'un bord de l'échantillon dans une zone périphérique via des éléments de cadre reliés de façon ferme au le bâti.

11. Dispositif de chargement selon la revendication 9 ou 10, **caractérisé en ce que** la zone périphérique s'étend sur une largeur d'au moins 1 cm.

12. Dispositif de chargement selon l'une quelconque des revendications précédentes, **caractérisé en ce que** le bâti (3) présente une unité dynamométrique pour mesurer les forces de réaction de l'échantillon (2) par rapport au bâti et/ou **en ce que** le bâti (3) présente un dispositif pour mesurer l'élongation de l'échantillon, au moyen d'un capteur de déplacement mécanique ou optique.

13. Dispositif de chargement selon l'une quelconque des revendications précédentes, **caractérisé en ce que** l'échantillon en forme de plaque présente une épaisseur d'au moins 4 mm ou au moins une d'au moins 500 cm².

14. Procédé de fonctionnement du dispositif de chargement selon l'une quelconque des revendications précédentes, **caractérisé en ce qu'**au moins deux unités de chargement (4a, 4b) exercent respectivement un déplacement défini et/ou une force définie sur l'échantillon (2).

15. Procédé de fonctionnement selon la revendication 14, **caractérisé en ce que** les forces appliquées sont appliquées de façon statique ou dynamique, de préférence avec des fréquences d'alternance de l'effort inférieure à 1 Hertz, et particulièrement de préférence inférieures à 10 Hertz.
